# DEMANDE DE BREVET EUROPEEN

(11) **EP 1 526 511 A1**
(43) Date de publication de la demande: **27.04.2005**
(21) Numéro de dépôt: 04292449.8
(22) Date de dépôt: 14.10.2004
(51) Int. Cl.: G10L 21/02, H04M 1/60, H04Q 7/32

(54) **Terminal de téléphonie à gestion, en réception, de la qualité de restitution vocale**

(30) Priorité: 21.10.2003 FR 0312270
(71) Demandeur: ALCATEL, 75008 Paris (FR)
(72) Inventeur: Gass, Raymond, 67150 Bolsenheim (FR); Le Creff, Michel, 95450 Vigny (FR)
(74) Mandataire: Sciaux, Edmond

(57) **Abrégé**

Un terminal de téléphonie (UE) comprend des moyens de réception de signaux téléphoniques (MER) et des moyens de traitement (MT) chargés, d'une part, en l'absence d'activité vocale, de déterminer un niveau de bruit de confort à générer en fonction de données de bruit, et d'autre part, en présence de signaux téléphoniques reçus représentatifs de signaux de voix, de déterminer des signaux de bruit en fonction de données de bruit, puis de retrancher des signaux téléphoniques reçus une partie au moins de ces signaux de bruit.

## Description

L'invention concerne le domaine des terminaux de communication, et plus particulièrement les terminaux assurant une fonction de téléphonie leur permettant d'échanger des signaux vocaux.

Comme le sait l'homme de l'art, la qualité d'une communication téléphonique est fréquemment dégradée par les terminaux eux-mêmes, ainsi que par les équipements de communication des réseaux de communications.

Cette dégradation résulte généralement d'un ou plusieurs paramètres tels que l'écho, le délai de transmission (ou retard), la distorsion, la perte de signaux ou la compression de signaux. Elle est plus particulièrement sensible dans le cas des communications téléphoniques sur Internet, également appelées « voix sur IP » (ou VolP pour « Voice over IP »), dans lesquelles les signaux téléphoniques sont transmis sous la forme de paquets après une conversion analogique-numérique suivie d'un codage et d'une compression.

Plusieurs solutions ont été proposées pour tenter de limiter les effets d'un ou plusieurs paramètres précités. Ainsi, on peut contrôler l'écho à l'aide de contrôleurs ou suppresseurs d'écho répondant à la norme ITU-T G.131. On peut également réduire les délais de transmission et les taux de perte de paquets en effectuant un contrôle du trafic de données de voix au niveau du réseau. On peut également équiper les terminaux de téléphonie de sorte que leurs utilisateurs puissent faire varier le volume sonore de réception, notamment en cas de difficulté d'audition ou de très faible niveau sonore de réception.

Ces solutions permettent certes de réduire la dégradation induite par le paramètre concerné, mais dans certaines circonstances elles peuvent augmenter la dégradation induite par un autre paramètre. Ainsi, l'ajustement du niveau sonore en réception induit des effets négatifs, notamment sur les boucles de stabilité et sur l'écho.

Il a également été proposé d'agir sur les signaux téléphoniques avant qu'ils ne soient transmis, afin d'en améliorer le rapport signal sur bruit. Ainsi, les procédés décrits dans les documents EP 1 104 925 A1 et US 2002/0156623 A1 proposent de soustraire une fonction de bruit, ou le bruit, des signaux vocaux à transmettre, juste avant qu'ils ne soient codés. Par ailleurs, le procédé décrit dans le document WO 02/101722 A1 propose de remplacer le bruit superposé à la voix par un bruit de confort.

Ces trois procédés agissant sur les signaux originaux (ou natifs), ils modifient leur nature, si bien que l'utilisateur récepteur ne peut pas savoir dans quel environnement sonore évolue l'utilisateur émetteur. En outre, ces procédés augmentent le nombre de traitements que doivent effectuer les terminaux de téléphonie émetteur, ce qui consomme des ressources CPU qui pourraient être utilisées pour d'autres tâches.

Par ailleurs, les solutions connues ne tiennent pas compte des traitements de signaux récemment développés pour la voix sur IP (VoIP), et en particulier des mécanismes de détection d'activité vocale (ou VAD pour « Voice Activity Détection »).

Aucune solution connue n'étant entièrement satisfaisante, l'invention a donc pour but d'améliorer la situation, en particulier dans les environnements bruités.

Elle propose à cet effet un terminal de téléphonie comprenant des moyens de réception de signaux téléphoniques et des moyens de traitement chargés, d'une part, en l'absence d'activité vocale, de déterminer un niveau de bruit de confort à générer en fonction de données de bruit, et d'autre part, en présence de signaux téléphoniques reçus représentatifs de signaux de voix, de déterminer des signaux de bruit en fonction de données de bruit, puis de retrancher des signaux téléphoniques reçus une partie au moins de ces signaux de bruit.

Préférentiellement, les moyens de traitement sont chargés de retrancher des signaux téléphoniques, qui ont été reçus pendant une phase d'activité vocale (c'est-à-dire représentatifs de signaux de voix), des signaux de bruit déduits de données de bruit associées à une phase d'absence d'activité vocale qui a précédée ladite phase d'activité vocale.

Les données de bruit sont par exemple représentatives des caractéristiques spectrales et énergétiques du bruit au niveau du terminal émetteur.

Par ailleurs, au moins certaines des données de bruit peuvent être transmises par le terminal émetteur sous la forme de trames de descripteurs d'insertion de silence (ou SIDs pour « Silence Information Descriptors ») constituant des signaux téléphoniques.

En variante ou en complément, le terminal de téléphonie peut comprendre des moyens d'analyse chargés de déterminer des données de bruit à partir de signaux téléphoniques reçus, afin de les délivrer aux moyens de traitement. Dans ce cas, les moyens d'analyse peuvent être éventuellement configurés de manière à déterminer les données de bruit durant les phases d'absence d'activité vocale. Par ailleurs, ces moyens d'analyse peuvent être agencés de manière à délivrer les données de bruit aux moyens de traitement sous la forme de descripteurs d'insertion de silence (ou SIDs). Dans ce cas, il est avantageux qu'ils constituent un module de détection d'activité vocale de type VAD.

Bien entendu, lorsque les données de bruit sont intégrées dans des descripteurs d'insertion de silence (ou SIDs) les moyens de traitement sont chargés de les extraire des descripteurs d'insertion de silence.

Par ailleurs, il est avantageux de prévoir des moyens d'observation alimentés en signaux téléphoniques reçus par les moyens d'émission/réception et chargés, d'une part, de déterminer si les signaux téléphoniques reçus comprennent, ou non, des descripteurs d'insertion de silence et/ou des données d'information accompagnant des signaux de voix et de bruit, et d'autre part, de transmettre les signaux téléphoniques reçus soit aux moyens de traitement lorsqu'ils comprennent des données d'information et/ou des descripteurs d'insertion de silence, soit aux moyens d'analyse lorsqu'ils ne comprennent pas de données d'information ou de descripteur d'insertion de silence.

Selon une autre caractéristique de l'invention, les moyens de traitement peuvent être agencés de manière à déterminer le niveau de bruit de confort à générer et la partie des signaux de bruit à retrancher des signaux téléphoniques reçus en fonction, en outre, d'instructions fournies par l'utilisateur du terminal de téléphonie dans lequel ils sont implantés.

L'invention est particulièrement bien adaptée, bien que de façon non exclusive, aux terminaux de communication disposant d'une application téléphonique de type voix sur IP (ou VoIP).

D'autres caractéristiques et avantages de l'invention apparaîtront à l'examen de la description détaillée ci-après, et des dessins annexés, sur lesquels :
- la figure 1 illustre de façon schématique les relations entre les principaux modules fonctionnels d'un terminal de téléphonie de type Ethernet ou WLAN, et
- la figure 2 illustre schématiquement un exemple d'agencement, sur la voie de réception, de modules fonctionnels d'un terminal de téléphonie, permettant la mise en oeuvre de l'invention.

Les dessins annexés pourront non seulement servir à compléter l'invention, mais aussi contribuer à sa définition, le cas échéant.

L'invention a pour objet de permettre la gestion de la qualité de restitution sonore au niveau d'un terminal de communication assurant une fonction de téléphonie.

On entend ici par « terminal de communication » tout équipement de communication, fixe ou mobile, agencé de manière à échanger des signaux téléphoniques au sein d'un ou plusieurs réseaux de communications, comme par exemple des réseaux publics et/ou privés de téléphonie, cellulaires ou non, et des réseaux publics et/ou privés de données, et éventuellement via un réseau local filaire (ou LAN pour « Local Area Network ») ou un réseau local sans fil (ou WLAN pour « Wireless LAN »). Il s'agit par exemple d'un micro-ordinateur fixe ou portable (ou mobile), ou d'un téléphone fixe ou mobile, ou encore d'un assistant numérique personnel (ou PDA).

Par ailleurs, on entend ici par « réseau de téléphonie » un réseau appartenant à un opérateur de téléphonie, comme par exemple un réseau de type commuté (ou RTC pour « Réseau Téléphonique Commuté », ou encore PSTN pour « Public Switched Telephony Network »), ou de type PLMN (pour « Public Land Mobile Network »), comme par exemple les réseaux GSM, GSM/GPRS et UMTS. En outre, on entend ici par « réseau de données » un réseau à protocole Internet (IP), par exemple.

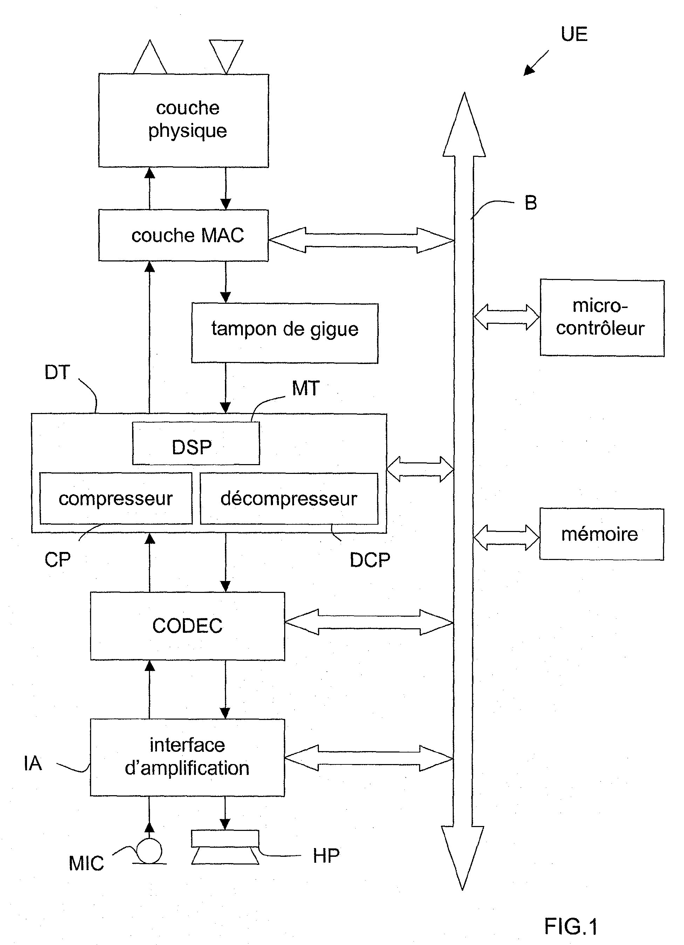

Dans ce qui suit, on considère, comme illustré sur la figure 1, que le terminal de communication est un téléphone mobile UE agencé de manière à assurer un service de type « voix sur IP » (ou VolP pour « Voice over IP »). Mais, bien entendu, l'invention n'est pas limitée à ce type de terminal de communication et concerne notamment les micro-ordinateurs équipés d'un haut parleur, d'un microphone et d'une application logicielle de téléphonie (ou d'une portion d'une application logicielle de téléphonie), plus connue sous l'appellation anglaise de « soft phone ».

Le téléphone UE, illustré schématiquement sur la figure 1, est par exemple de type WLAN. Il comporte donc tout d'abord une couche physique WLAN couplée, sur la voie de réception comme sur la voie d'émission, à une couche MAC (pour « Médium Access Control »). Si le téléphone était de type LAN, il disposerait d'une couche physique Ethernet au lieu de la couche physique WLAN.

La couche MAC est couplée côté émission à un dispositif de traitement DT comprenant, notamment, un module de traitement de signaux numériques (ou DSP) MT, un module de compression de données (ou « compresseur ») CP et un module de décompression de données (ou « décompresseur ») DCP. Le couplage entre la couche MAC et le dispositif de traitement DT est direct sur la voie d'émission, tandis qu'il s'effectue via un module tampon de traitement de gigue (ou « tampon de gigue ») sur la voie de réception (concernée par l'invention).

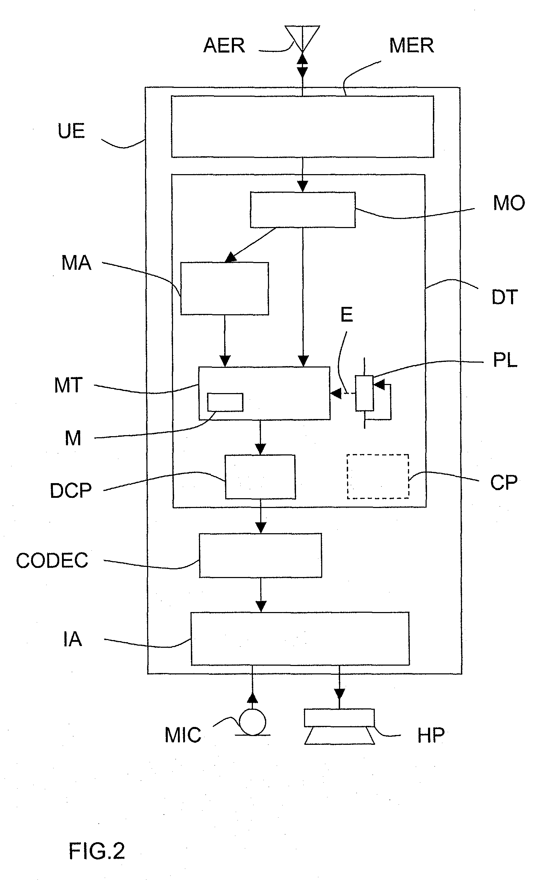

La couche physique WLAN, la couche MAC et le module tampon de traitement de gigue constituent en partie ce que l'on appellera ci-après, en référence à la figure 2, le module d'émission/réception MER.

Le dispositif de traitement DT, qui est par exemple un microprocesseur, est couplé, sur la voie de réception comme sur la voie d'émission, à un codeur/décodeur (ou « CODEC »), qui est lui-même couplé, sur la voie de réception comme sur la voie d'émission, à un module d'interface d'amplification IA. Le module d'interface d'amplification IA est couplé, sur la voie de réception comme sur la voie d'émission, à au moins un microphone MIC et au moins un haut-parleur HP.

Le téléphone UE comporte par ailleurs un bus de données B, par exemple de type PCMCIA, couplé notamment à la couche MAC, au dispositif de traitement DT, au CODEC, à l'interface d'amplification IA, à un micro-contrôleur et à au moins une mémoire.

Les fonctionnements et rôles respectifs des différentes couches et modules précités étant bien connus de l'homme de l'art, il ne seront pas décrits ici.

On se réfère maintenant à la figure 2 pour décrire un exemple d'agencement permettant de mettre en oeuvre l'invention sur la voie de réception d'un téléphone UE.

L'invention concerne plus particulièrement le dispositif de traitement DT du téléphone UE, qui est couplé, d'une part, au CODEC, et d'autre part, au module d'émission/réception MER, lui même couplé, ici, à une antenne d'émission/réception AER. Cette antenne AER est chargée de réceptionner et d'émettre entre autre des signaux téléphoniques lorsqu'une liaison a été établie entre son téléphone UE et un terminal distant afin de permettre à leurs utilisateurs respectifs de converser.

Il est important de noter à ce stade qu'une conversation téléphonique peut être décomposée en des phases dites « d'activité vocale », et des phases dites « de silence » (ou d'absence d'activité vocale). L'activité vocale est transmise au sein d'un réseau IP sous la forme de flux sensiblement continus de séquences de paquets de données représentatifs de la voix et du bruit ambiant.

Les paquets de données transmis peuvent comporter des données d'information signalant qu'ils comportent des signaux de voix et de bruit. Dans ce cas, le téléphone qui émet les paquets doit disposer d'un module de détection d'activité vocale (par exemple de type VAD pour « Voice Activity Detection ») chargé, d'une part, d'adjoindre aux signaux de voix et de bruit pendant les phases d'activité vocale des données d'information (signalant par exemple un traitement VAD sous la forme d'un entête), et d'autre part, de générer pendant les phases de silence des données de bruit représentatives du bruit ambiant et comprenant également, généralement, des données d'information (signalant par exemple un traitement VAD sous la forme d'un entête).

Plus précisément, le module VAD génère des trames qui comportent des descripteurs d'insertion de silence (ou SIDs pour « Silence Insertion Descriptors ») contenant les données de bruit.

Les trames SID sont définies par l'annexe A du standard ITU-T G.723.1. Par ailleurs, la détection d'activité vocale de type VAD est définie par l'annexe B du standard ITU-T G.729. Des informations complémentaires relatives à la détection d'activité vocale de type VAD peuvent être également trouvées dans le document brevet FR 2825826.

Les données de bruit sont par exemple des informations décrivant des spectres de fréquence et d'énergie représentant le bruit ambiant pendant une phase de silence.

Les trames SID sont transmises de façon discontinue. Elles sont généralement intercalées entre des flux de paquets de données de voix et de bruit.

Il est important de noter que l'invention concerne également les situations dans lesquelles le terminal de téléphonie émetteur ne dispose pas de module de détection d'activité vocale. Dans ce cas, les paquets de données de voix et de bruit ne comportent pas de données d'information, et aucune donnée dédiée spécifiquement au bruit ambiant n'est transmise par le terminal de téléphonie émetteur au terminal de téléphonie récepteur. Par conséquent, on entend ici par signaux téléphoniques aussi bien les signaux constitués des paquets de données de voix et de bruit, avec ou sans données d'information, que les signaux constitués des trames SID comportant des données de bruit, avec ou sans données d'information. Il est ici rappelé qu'en général lorsque le téléphone émetteur n'est pas équipé d'un module VAD, il transmet pendant toute la conversation des signaux téléphoniques, y compris pendant les phases de silence.

Selon l'invention, le dispositif de traitement DT comporte au moins un module de traitement de signal numérique MT (DSP) chargé de gérer la qualité de la restitution sonore. Ce module de traitement MT est plus précisément chargé, d'une part, pendant les phases de silence, c'est-à-dire en l'absence d'activité vocale, de déterminer un niveau de bruit de confort à générer en fonction de données de bruit, et d'autre part, en présence de signaux téléphoniques reçus, de déterminer des signaux de bruit en fonction de données de bruit, puis de retrancher des signaux téléphoniques reçus une partie au moins des signaux de bruit déterminés.

Dans l'exemple illustré sur la figure 2, le dispositif de traitement DT est agencé de manière à traiter aussi bien les signaux téléphoniques reçus qui ne comportent ni données d'information ni données de bruit, et que l'on peut qualifier de signaux de type I, que les signaux téléphoniques reçus qui comportent des données d'information et/ou des données de bruit, et que l'on peut qualifier de signaux de type II.

Mais, bien entendu, on peut envisager une première variante dans laquelle le dispositif de traitement DT n'est agencé que pour traiter les signaux téléphoniques reçus qui ne comportent ni données d'information ni données de bruit, et une seconde variante dans laquelle le dispositif de traitement DT n'est agencé que pour traiter les signaux téléphoniques reçus qui comportent des données d'information et/ou des données de bruit.

Afin d'assurer son double traitement, le dispositif de traitement DT, de la figure 2, comporte tout d'abord, en complément du module de traitement MT, du compresseur CP et du décompresseur DCP, un module d'observation MO et un module d'analyse MA.

Le module d'observation MO est alimenté en signaux téléphoniques reçus par le module d'émission/réception MER. Il est tout d'abord chargé, chaque fois que le module d'émission/réception MER lui transmet des signaux téléphoniques reçus, de déterminer si ces signaux téléphoniques comprennent, ou non, des données de bruit ou des données d'information accompagnant des signaux de voix et de bruit. En d'autres termes, le module d'observation MO détermine si les signaux téléphoniques reçus sont de type I ou de type II.

Le module d'observation MO est ensuite chargé de transmettre les signaux téléphoniques reçus soit au module de traitement MT s'ils comprennent des données d'information et/ou des données de bruit, soit au module d'analyse MA s'ils ne comprennent pas de données d'information ou de données de bruit.

Le module d'analyse MA est chargé d'analyser les signaux téléphoniques reçus (de type 1) afin de déduire de ceux-ci des données de bruit. Ce module d'analyse MA peut être par exemple un module de détection d'activité vocale (ou VAD) délivrant des données de bruit sous la forme de descripteurs d'insertion de silence (SID).

On peut envisager que le module d'analyse MA ne procède à ses déterminations que durant les phases d'absence d'activité vocale. Il est en effet plus facile de déterminer les caractéristiques du bruit ambiant lorsqu'il n'est pas superposé (ou mélangé) à la voix.

On considère dans ce qui suit que le module d'analyse MA est un module de type VAD, chargé de délivrer des trames SID. On considère par ailleurs que les données de bruit, qui sont transmises au téléphone récepteur UE, se présentent sous la forme de trames SID. Dans ce cas, le module de traitement MT est configuré de manière à extraire des trames SID les données de bruit qu'elles contiennent, qu'elles proviennent directement du module d'observation MO ou du module d'analyse MA. Ainsi, le module de traitement MT ne fait que traiter des signaux de type II, puisqu'il est désormais toujours alimenté en signaux de type II provenant soit directement du module d'observation MO, soit du module d'analyse MA (après une transformation de type I vers type II).

Il est important de noter que dans cette configuration, lors de la phase d'établissement de la communication entre les deux téléphones, aucune information n'est donnée concernant l'utilisation d'un module VAD. Par conséquent, le téléphone récepteur UE en déduit, par défaut, qu'il doit utiliser son propre module VAD pour fournir des trames SID.

Lorsque le module de traitement MT reçoit du module d'observation MO ou du module d'analyse MA des descripteurs d'insertion de silence (SID) correspondant à une phase de silence, il en extrait les données de bruit, puis il détermine à partir de celles-ci un niveau du bruit de confort à générer pour reproduire tout ou partie du bruit ambiant côté émetteur durant ladite phase de silence.

Ce niveau de bruit peut être déterminé en fonction d'une instruction reçue de l'utilisateur du téléphone récepteur UE sur une entrée E du module de traitement MT, couplée à l'interface homme/machine dudit téléphone. Cette instruction peut être par exemple représentative d'un niveau d'intensité sonore. Le niveau de bruit généré est par exemple défini par l'opération Bruit _{SID} - Bruit _{SID}/n, où Bruit _{SID} représente le bruit ambiant tel que défini par les données de bruit extraites des trames SID reçues, et n est une valeur supérieure ou égale à 1. La valeur de n peut être fixée par un « potentiomètre logiciel » PL contrôlé par le module de traitement MT, compte tenu des instructions fournies par l'utilisateur.

Le module de traitement MT comporte une mémoire M dans laquelle il stocke les données de bruit extraites des trames SID qu'il a reçues, ainsi que préférentiellement la valeur du paramètre n associé, afin de pouvoir les réutiliser lorsqu'il reçoit des données de voix et de bruit (réel).

Le bruit de confort généré par le module de traitement MT est transmis au décompresseur DCP. A ce stade, le bruit de confort se présente toujours sous la forme de signaux numériques compressés et codés.

Les signaux sont par exemple compressés à un débit de 8 kbits/s et décompressés par le décompresseur DCP de manière à être à un débit de 64 kbits/s qui correspond par exemple au standard du multiplexage temporel (ou TDM pour « Time Division Multiplexing »).

Ces signaux décompressés, mais toujours codés, alimentent ensuite le CODEC.

Il est ici rappelé que le type de codage choisi pour une conversation téléphonique est fixé par les deux téléphones concernés, lors de l'échange de signalisation qui a lieu pendant la phase d'établissement de la communication. Ce codage peut ainsi être effectué de façon linéaire ou à l'aide des codes G711 (loi A ou µ), puis compressés à l'aide d'autres codes comme par exemple G723 ou G729.

Les signaux décodés par le CODEC alimentent le module d'interface d'amplification IA qui est couplé au haut parleur HP (ainsi qu'au microphone MIC). Ils sont alors amplifiés et convertis en signaux sonores audibles par l'utilisateur du téléphone récepteur UE.

Lorsque le module de traitement MT reçoit du module d'observation MO ou du module d'analyse MA des paquets de données de voix et de bruit accompagnées de données d'information signalant une phase d'activité vocale, il en extrait tout d'abord les données de voix et de bruit (réel) qui sont superposées (ou mélangées). Puis, il accède à sa mémoire M afin d'extraire les dernières données de bruit (Bruit _{SID}) et éventuellement la valeur du paramètre n associé, qui correspondent à la phase de silence qui a précédée ladite phase d'activité vocale.

Le module de traitement MT retranche alors des données de voix et de bruit (réel) un bruit constitué à partir des données de bruit (Bruit _{SID}) ainsi qu'éventuellement à partir de la valeur du paramètre n associé, extraites de la mémoire M. Comme indiqué précédemment, le niveau du bruit qui est retranché peut être déterminé en fonction d'une instruction reçue de l'utilisateur du téléphone récepteur UE sur l'entrée E du module de traitement MT. Mais, il est préférable qu'il corresponde à la valeur du paramètre n ayant servi à générer le bruit de confort. Par conséquent, il est préférable que le module de traitement MT effectue l'opération (Voix + Bruit _{Réel}) - (Bruit _{SID}/n).

Assimiler le bruit (Bruit _{SID}), qui correspond à une phase de silence précédant une phase d'activité vocale, au bruit (Bruit _{Réel}), superposé (ou mélangé) à la voix pendant ladite phase d'activité vocale, est une excellente approximation. En effet, au cours d'une conversation il existe de très nombreuses phases de silence intercalées entre des phases d'activité vocale, et l'intervalle temporel moyen entre deux variations audibles du bruit ambiant de fond est généralement beaucoup plus long que l'intervalle temporel moyen entre deux phases de silence.

L'opération de retranchement est particulièrement aisée lorsque les signaux téléphoniques sont codés de façon linéaire ou à l'aide des codes G711 (loi A ou µ). Elle est un peu plus complexe lorsque les paquets sont en outre compressés à l'aide d'autres codes comme par exemple G723 ou G729.

Le résultat du retranchement fournit des données numériques toujours représentatives de la voix de l'utilisateur émetteur et du bruit ambiant, mais dont le rapport signal (de voix) sur bruit est accru de façon choisie (en fonction de la valeur du paramètre n). Comme indiqué précédemment, ces données numériques sont transmises au décompresseur DCP afin qu'il les décompresse, puis elles sont transmises au CODEC afin qu'il les décode, puis une fois décompressées et décodées elles sont transmises au module d'interface d'amplification IA et finalement au haut-parleur HP qui les transforme en signaux sonores.

Grâce à l'invention, on peut augmenter le rapport signal sur bruit d'une valeur choisie en n'intervenant qu'au niveau du signal téléphonique reçu et en utilisant peu de ressources CPU du téléphone récepteur UE.

Le module de traitement MT, le module d'analyse MA et le module d'observation MO, selon l'invention, peuvent être réalisés sous la forme de circuits électroniques, de modules logiciels (ou informatiques), ou d'une combinaison de circuits et de logiciels.

L'invention ne se limite pas aux modes de réalisation de terminal de communication décrits ci-avant, seulement à titre d'exemple, mais elle englobe toutes les variantes que pourra envisager l'homme de l'art dans le cadre des revendications ci-après.

Ainsi, on peut envisager un terminal de communication, par exemple de type téléphone IP, dans lequel le dispositif de traitement DT est intégré dans un composant, comme par exemple le micro-contrôleur, ainsi qu'éventuellement le Codec et/ou le module tampon de gigue et/ou la couche MAC.

## Revendications

1. Terminal de téléphonie (UE) comprenant des moyens de réception de signaux téléphoniques (MER), **caractérisé en ce qu'**il comprend des moyens de traitement (MT) agencés i) en l'absence d'activité vocale, pour déterminer un niveau de bruit de confort à générer en fonction de données de bruit, et ii) en présence de signaux téléphoniques reçus représentatifs de signaux de voix, pour déterminer des signaux de bruit en fonction de données de bruit, puis retrancher une partie au moins desdits signaux de bruit des signaux téléphoniques reçus.

2. Terminal de téléphonie selon la revendication 1, **caractérisé en ce que** lesdits moyens de traitement (MT) sont agencés pour retrancher des signaux téléphoniques, reçus pendant une phase d'activité vocale, des signaux de bruit déduits de données de bruit associées à une phase d'absence d'activité vocale ayant précédée ladite phase d'activité vocale.

3. Terminal de téléphonie selon la revendication 1, **caractérisé en ce que** lesdites données de bruit sont représentatives de caractéristiques spectrales et énergétiques de bruit.

4. Terminal de téléphonie selon la revendication 1, **caractérisé en ce que** certaines au moins desdites données de bruit sont transmises par un terminal émetteur sous la forme de descripteurs d'insertion de silence constituant des signaux téléphoniques.

5. Terminal de téléphonie selon la revendication 1, **caractérisé en ce qu'**il comprend des moyens d'analyse (MA) agencés pour déterminer des données de bruit à partir de signaux téléphoniques reçus et pour délivrer ces données de bruit auxdits moyens de traitement (MT).

6. Terminal de téléphonie selon la revendication 5, **caractérisé en ce que** lesdits moyens d'analyse (MA) sont agencés pour déterminer lesdites données de bruit durant les phases d'absence d'activité vocale.

7. Terminal de téléphonie selon la revendication 5, **caractérisé en ce que** lesdits moyens d'analyse (MA) sont agencés pour délivrer lesdites données de bruit auxdits moyens de traitement (MT) sous la forme de descripteurs d'insertion de silence.

8. Terminal de téléphonie selon la revendication 7, **caractérisé en ce que** lesdits moyens d'analyse (MA) sont agencés sous la forme d'un module de détection d'activité vocale de type VAD.

9. Terminal de téléphonie selon la revendication 4, **caractérisé en ce que** lesdits moyens de traitement (MT) sont agencés pour extraire lesdites données de bruit de descripteurs d'insertion de silence.

10. Terminal de téléphonie selon la revendication 9, **caractérisé en ce qu'**il comprend des moyens d'observation (MO) alimentés en signaux téléphoniques reçus par lesdits moyens d'émission/réception (MER) et agencés pour déterminer si lesdits signaux téléphoniques reçus comprennent, ou non, des descripteurs d'insertion de silence et/ou des données d'information accompagnant des signaux de voix et de bruit, et pour transmettre lesdits signaux téléphoniques reçus soit auxdits moyens de traitement (MT) lorsqu'ils comprennent des données d'information et/ou des descripteurs d'insertion de silence, soit auxdits moyens d'analyse (MA) lorsqu'ils ne comprennent pas de données d'information ou de descripteur d'insertion de silence.

11. Terminal de téléphonie selon la revendication 1, **caractérisé en ce que** lesdits moyens de traitement (MT) sont agencés pour déterminer le niveau de bruit de confort à générer et la partie des signaux de bruit à retrancher des signaux téléphoniques reçus en fonction en outre d'instructions d'utilisateur.

12. Terminal de téléphonie selon la revendication 1, **caractérisé en ce qu'**il est agencé sous la forme d'un téléphone à protocole Internet.
